# EUROPEAN PATENT APPLICATION

(11) **EP 4 576 341 A1**
(43) Date of publication of application: **25.06.2025**
(21) Application number: 23873157.4
(22) Date of filing: 26.09.2023
(51) Int. Cl.: H01M 10/658, H01M 10/647, H01M 50/231, H01M 50/242, H01M 50/124, H01M 50/342, H01M 50/358, H01M 10/6551, H01M 10/6554, H01M 50/211

(54) **BATTERY CELL AND BATTERY MODULE COMPRISING SAME**

(30) Priority: 29.09.2022 KR 20220124726
(71) Applicant: LG Energy Solution, Ltd., Seoul 07335 (KR)
(72) Inventor: NA, Jong Seung, Daejeon 34122 (KR); PARK, Sang Jun, Daejeon 34122 (KR); CHO, Jung Keun, Daejeon 34122 (KR); AN, Hyun Soo, Daejeon 34122 (KR)
(74) Representative: Plasseraud IP
(86) International application number: PCT/KR2023/014925
(87) International publication number: WO 2024/072046

(57) **Abstract**

A battery cell according to an embodiment of the present invention may include: an electrode assembly; a battery case configured to accommodate the electrode assembly; an electrode lead connected to the electrode assembly to protrude to the outside of the battery case; and an insulating case which is configured to accommodate the battery case and in which a slit through which the electrode lead passes is defined.

## Description

### TECHNICAL FIELD

### CROSS-REFERENCE TO RELATED APPLICATION

The present application claims the benefit of the priority of Korean Patent Application No. 10-2022-0124726, filed on September 29, 2022, which is hereby incorporated by reference in its entirety.

### TECHNICAL FIELD

The present invention relates to a battery cell for effectively preventing thermal propagation and a battery module including the same.

### BACKGROUND ART

Secondary batteries capable of charging and discharging are suitable for use as built-in battery cells because the secondary batteries do not require replacement of battery cells, and as stability and capacity of secondary batteries are rapidly improved, the secondary batteries are applied to various devices.

For example, secondary batteries are not only widely used as energy sources for wireless mobile devices, which are small multi-functional products, or wearable devices worn on the human body, but also are used as an energy source or power storage system (ESS) for electric vehicles and hybrid electric vehicles, which are proposed as an alternative to existing gasoline vehicles and diesel vehicles that cause air pollution.

Particularly, in order to use a secondary battery as a large-capacity and high-output energy source, a battery module including a plurality of battery cells or a battery pack including a plurality of the battery modules is being used. As described above, as the secondary battery is used as the energy source of large capacity and high output, the problem of securing safety of the secondary battery has become an important subject of interest.

According to the related art, in order to prevent the secondary battery from rapidly shortening its lifespan due to a temperature during long-term use, a cooling system has been designed based on a heat release rate and a reliable operating temperature according to usage environments of the secondary battery. However, when one battery cell provided in the battery module or battery pack exceeds a critical temperature due to abnormal heat generation, thermal runaway (TR) may occur, and thermal propagation (TP) to surrounding battery cells may occur. This may cause safety problems such as ignition.

To prevent such thermal propagation in the related art, an insulating plate is disposed between the battery cells. However, since a gas and flame generated from the battery cell bypass the insulating plate to flow, there is a limit to sufficiently delay or prevent the thermal runaway.

### DISCLOSURE OF THE INVENTION

### TECHNICAL PROBLEM

An object of the present invention for solving the above problems is to provide a battery cell that is capable of effectively delaying or preventing thermal propagation and a battery module including the same.

### TECHNICAL SOLUTION

A battery cell according to an embodiment of the present invention may include: an electrode assembly; a battery case configured to accommodate the electrode assembly; an electrode lead connected to the electrode assembly, the electrode lead extending through the battery case to protrude outside of the battery case; and an insulating case configured to accommodate the battery case therein, the insulating case including a slit through which the electrode lead extends.

The slit may extend in parallel to a width direction of the battery case.

One surface of the insulating case may be opened.

The slit may be connected to the opened one surface of the insulating case.

The insulating case may include at least one material selected from mica, aerogel, or silicon.

The insulating case may have a thickness greater than or equal to a thickness of the battery case.

The insulating may include a vent in a surface different from the surface in which the slit is located.

The insulating case may include: an elastic layer having an elastic material; and an insulating layer stacked on the elastic layer and having an insulating property greater than an insulating property of the elastic layer.

The elastic layer may include a polyurethane material.

One surface of the insulating case may have a thickness less than a thickness of another side of the insulating case.

A battery module according to an embodiment of the present invention may include: a case; a plurality of battery cells accommodated in the case; and a heatsink configured to dissipate heat generated from the plurality of battery cells. At least a portion of the plurality of battery cells may include: an electrode assembly; a battery case configured to accommodate the electrode assembly; an electrode lead connected to the electrode assembly to protrude to the outside of the battery case; and an insulating case which is configured to accommodate the battery case and in which a slit through which the electrode lead passes is defined.

One surface of the insulating case may be opened, and the battery case may be in contact with the heatsink through the opened one surface of the insulating case.

One surface of the insulating case may be in contact with the heatsink, and the one surface of the insulating case may have a thickness less than a thickness of another side of the insulating case.

In the insulating case, a vent hole may be located at a side spaced from and opposite the heatsink.

A battery cell according to an embodiment of the present invention may include: an electrode assembly; a battery case configured to accommodate the electrode assembly; and an insulating layer applied on an outer surface of the battery case, at least a portion of the insulating layer having a thickness greater than or equal to a thickness of the battery case.

The outer surface of the battery case may include: a first area coated with the insulating layer; and a second area to which the insulating layer is not applied or a thickness of the insulating layer applied to the second area is less than a thickness of the insulating layer applied to the first area.

A battery module according to an embodiment of the present invention may include: a case; a plurality of battery cells accommodated in the case; and a heatsink configured to dissipate heat generated from the plurality of battery cells. At least a portion of the plurality of battery cells may include: an electrode assembly; a battery case configured to accommodate the electrode assembly; an insulating layer which is applied on an outer surface of the pouch-type battery case and of which at least a portion has a thickness greater than or equal to that of the battery case.

The outer surface of the battery case may include: a first area coated with the insulating layer; and a second area which is not coated with the insulating layer, the second area being in contact with the heatsink.

The outer surface of the battery case may include: a first area coated with the insulating layer; and a second area coated with the insulating layer, a thickness of the insulating layer applied to the second area being less than a thickness of the insulating layer applied to the first area, wherein the insulating layer applied to the second area may be in contact with the heatsink.

### ADVANTAGEOUS EFFECTS

According to the preferred embodiment of the present invention, even if the thermal runaway and the fire occur in one battery cell, the thermal runaway or the fire spread to other surrounding battery cells may be delayed or prevented by the insulating case or the insulating layer.

In addition, the insulating case or the insulating layer may have the thickness equal to or greater than that of the battery case. Therefore, the sufficient insulation effect may be secured.

In addition, in the insulating case or the insulating layer, the portion that is in contact with the heatsink may be opened or formed thinly to prevent the heat dissipation performance of the battery cell from being deteriorated by the insulating case or the insulating layer, thereby effectively dissipating the heat of the battery cell.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is an exploded perspective view of a battery module according to an embodiment of the prevent invention.
FIG. 2 is an exploded perspective view of a battery cell according to an embodiment of the present invention.
FIG. 3 is a perspective view of the battery cell according to an embodiment of the present invention.
FIG. 4 is a cross-sectional view of the battery cells according to an embodiment of the present invention.
FIG. 5 is a cross-sectional view illustrating a modified example of the battery cells illustrated in FIG. 4.
FIG. 6 is a perspective view of a battery cell according to another embodiment of the present invention.
FIG. 7 is a cross-sectional view of the battery cells according to another embodiment of the present invention.
FIG. 8 is a perspective view of a battery cell according to further another embodiment of the present invention.
FIG. 9 is a cross-sectional view of the battery cells according to further another embodiment of the present invention.
FIG. 10 is a cross-sectional view illustrating a modified example of the battery cells illustrated in FIG. 9.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

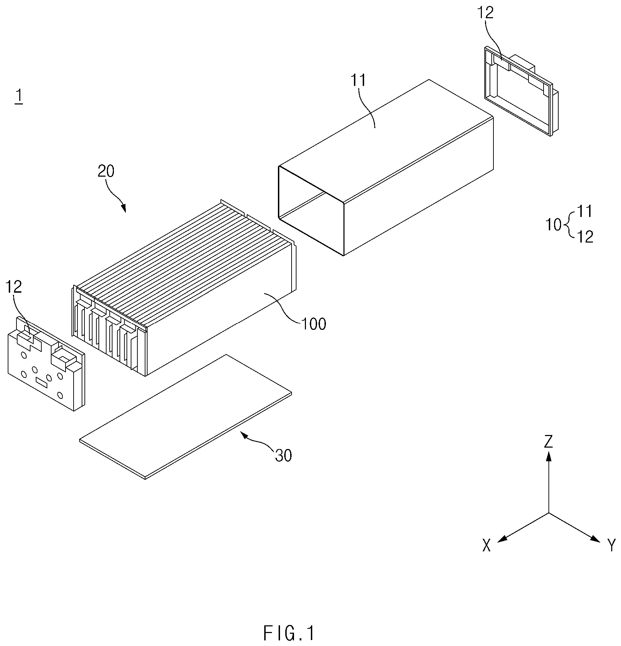

FIG. 1 is an exploded perspective view of a battery module according to an embodiment of the prevent invention.

A battery module 1 according to an embodiment of the present invention may include a case 10, a plurality of battery cells 100 accommodated in the case 10, and a heatsink 30 that dissipates heat from the plurality of battery cells 100.

The case 10 may define an outer appearance of the battery module 1. The case 10 may have a substantially box shape. The case 10 may have an internal space. For example, the case 10 may include a main body 11 of which both ends are opened, and an end plate 12 that covers both the opened ends of the main body 11.

The main body 11 may extend in a length direction of the battery cell 100 (for example, a direction parallel to an X-axis in FIG. 1), which will be described later. Hereinafter, a case in which the length direction of the battery cell 100 (for example, the direction parallel to the X-axis) is parallel to a front and rear direction will be described as an example.

The main body 11 may have a top surface, a bottom surface, and both side surfaces of the case 10. Front and rear surfaces of the main body 11 may be opened. A cell stack 20, in which the plurality of battery cells 100 are stacked, may be accommodated in the internal space of the main body 11 through the opened front or rear surfaces of the main body 11.

The main body 11 may be provided in one body, but is not limited thereto, and also, the plurality of plates may be coupled to each other.

A pair of end plates 12 may be provided. When the cell stack 20 is accommodated in the main body 11, the end plates 12 may cover the opened front and rear surfaces of the main body 11, respectively. Each of the end plates 12 may be coupled to the main body 11.

The plurality of battery cells 100 may be stacked side by side to form the cell stack 20. The plurality of battery cells 100 may be stacked on each other in a thickness direction (e.g., a direction parallel to a Y-axis).

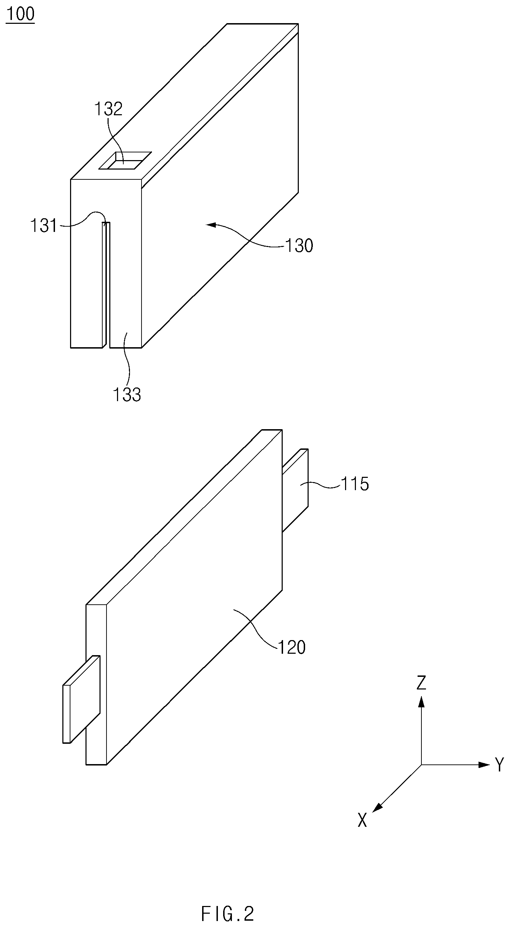

The cell stack 20 may be provided with a busbar frame on which a busbar that electrically connects an electrode lead 115 (see FIG. 2) of the plurality of battery cells 100 is installed. For example, the electrode lead 115 of each battery cell 100 may protrude to both sides in the length direction of the battery cell 100. In this case, the busbar frame may be provided at each of both the ends of the cell stack 20 in the length direction, and the end plate 12 may cover the busbar frame.

The plurality of battery cells 100 may be in contact with the heatsink 30. Thus, the heatsink 30 may effectively dissipate heat from the plurality of battery cells 100.

The heatsink 30 may be disposed on the case 10, more specifically, an inner bottom surface of the main body 11. However, it is not limited thereto, and the case 10, more specifically, the bottom surface of the main body may function as the heatsink 30.

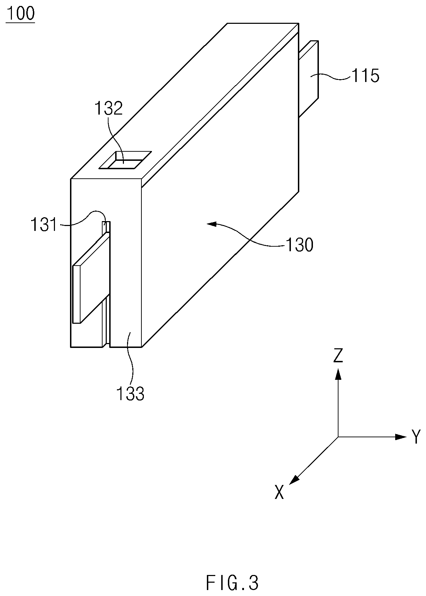

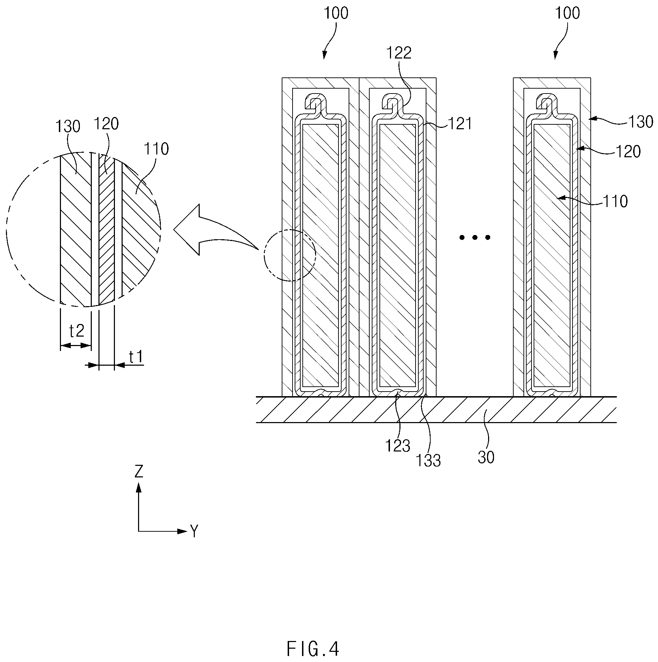

FIG. 2 is an exploded perspective view of the battery cell according to an embodiment of the present invention, FIG. 3 is a perspective view of the battery cell according to an embodiment of the present invention, and FIG. 4 is a cross-sectional view of the battery cells according to an embodiment of the present invention.

The battery cell 100 according to an embodiment of the present invention may include an electrode assembly 110 (see FIG. 4), an electrode lead 115, a battery case 120, and an insulating case 130.

The electrode assembly 110 may be provided by alternately stacking a positive electrode and a negative electrode with a separator therebetween. That is, the electrode assembly 110 may include a plurality of electrodes and a separator disposed between the plurality of electrodes to insulate the plurality of electrodes from each other. The electrode assembly 110 may be accommodated in the battery case 120. The electrode assembly 110 includes a stack type, a jelly-roll type, a stack and folding type, and the like, but is not limited thereto.

The electrode assembly 110 may include an electrode tab connected to the electrode lead 115, which will be described later. The electrode tab may be formed by cutting non-coating portions of the positive and negative electrodes or may be formed by connecting a separate conductive member to each of the non-coating portions.

The electrode lead 115 may be connected to the electrode assembly 110, more specifically, the electrode tab. The electrode lead 115 may protrude to the outside of the battery case 120. The electrode lead 115 may be provided as a pair that are electrically connected to the positive and negative electrodes, respectively. For example, the pair of electrode leads 115 may protrude to both sides in the length direction of the battery cell 100. However, it is not limited thereto, and also, the pair of electrode leads 115 may protrude in the same direction with respect to the length direction of the battery cell 100.

The battery case 120 may accommodate the electrode assembly 110.

Hereinafter, a case in which the battery case 120 is a pouch-type battery case formed by molding a laminate sheet will be described as an example. However, this embodiment is not limited thereto.

In the battery case 120, a cup part 121 having a pocket shape may be formed in at least one of the pair of cases connected by a bridge 123. In addition, when the bridge 123 is folded while the electrode assembly 110 is accommodated in the cup part 121, the pair of cases may be bonded to each other to form a sealing part 122.

The sealing part 122 may be disposed along a circumference of the cup part 121. A portion of the sealing part 122 disposed at an opposite side of the bridge 123 may be side-folded at least once and may preferably be double-side folded (DSF). In addition, the electrode lead 115 may protrude to the outside through the non-folded sealing part 122. A configuration of the pouch-type battery case is a well-known technology, and thus, detailed description will be omitted.

The insulating case 130 may accommodate the battery case 120. The insulating case 130 may have a substantially box shape, but is not limited thereto.

The insulating case 130 may include a material having an insulating property greater than that of the battery case 120. For example, the insulating case 130 may include at least one material selected from mica, aerogel, or silicon.

As a result, even if thermal runaway or fire occurs in one battery cell 100, an occurrence of thermal propagation or spreading of fire to other surrounding battery cells 100 may be delayed or prevented by the insulating case 130.

A thickness t2 of the insulating case 130 may be greater than or equal to a thickness t1 of the battery case 120. As a result, an insulation effect of the insulation case 130 may be sufficiently secured.

One surface (e.g., bottom surface) of the insulating case 130 may be opened. In more detail, at least a portion of one surface of the insulating case 130 may be opened to form an opening 133.

The opened one surface of the insulating case 130 may be a surface facing the heatsink 30 and may be covered by the heatsink 30.

The battery case 120 may be in contact with the heatsink 30 through opened one surface of the insulating case 130. Preferably, the bridge 123 of the battery case 120 and surroundings of the bridge 123 may be in contact with the heatsink 30 through opened one surface of the insulating case 130. As a result, heat dissipation performance of the battery cell 100 may be prevented from being deteriorated due to the insulating case 130, and heat of the battery cell 100 may be effectively dissipated.

A slit 131 through which the electrode lead 115 passes may be defined in the insulating case 130. Thus, the electrode lead 115 of the battery cell 100 may be easily connected to the outside through the slit 131.

The slit 131 may be connected to the opened one surface of the insulating case 130. In more detail, the slit 131 may extend parallel to a width direction of the battery case 120 (for example, a direction parallel to a Z axis), and one end of the slit 131 may be opened. Thus, while the battery case 120 is accommodated in the insulating case 130 through the opened one surface of the insulating case 130, the electrode lead 115 may be easily inserted into the slit 131.

In the insulating case 130, a vent hole 132 may be defined in a surface (e.g., top surface) different from surfaces (e.g., front and rear surfaces) on which the slit 131 is defined. Thus, an influence of gas discharged through the vent hole 132 on the electrode lead 115 inserted into the slit 131 may be minimized.

Thus, the vent hole 132 may be defined in a surface (e.g., top surface) of the insulating case 130 that is different from surfaces (e.g., both surfaces) facing the other battery cell 100. Thus, an influence of gas discharged through the vent hole 132 on other battery cells 100 may be minimized.

The vent hole 132 may be defined in an opposite surface (e.g., top surface) of the opened surface (e.g., bottom surface) of the insulating case 130. That is, the vent hole 132 may be defined at an opposite side of the heatsink 30.

An area of the vent hole 132 may be larger than that of the slit 131. Thus, if an internal pressure of the insulating case 130 increases rapidly due to the gas generated by thermal runaway or fire within the insulating case 130, the gas may be preferentially and quickly discharged through the vent hole 132. The vent hole 132 is normally closed with a cover, and when the internal pressure of the insulating case 130 increases above a set value, the cover may be ruptured to open the vent hole 132.

Although not shown in the drawing, some of the plurality of battery cells provided in the battery module 1 may not include the insulating case 130. For example, the battery cells 100 including the insulating case 130 and the battery cells that do not include the insulating case 130 in the plurality of battery cells may be alternately arranged.

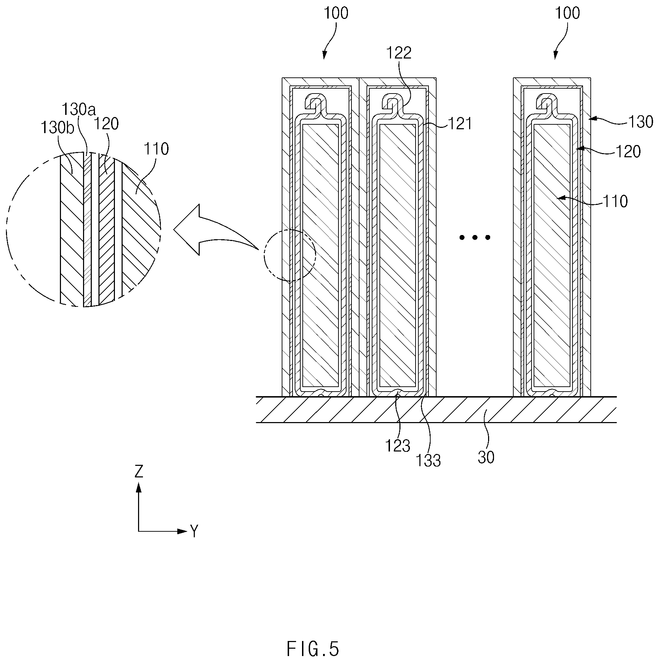

FIG. 5 is a cross-sectional view illustrating a modified example of the battery cells illustrated in FIG. 4.

According to a modified example, the insulating case 130 of the battery cell 100 may have a multi-layer structure made of different materials. In more detail, the insulating case 130 may have an elastic layer 130a made of an elastic material, and an insulating layer 130b that is stacked on the elastic layer 130a and has an insulating property greater than that of the elastic layer 130a.

The elastic layer 130a may be stacked inside the insulating layer 130b, but is not limited thereto. For example, the elastic layer 130a may be stacked between the pair of insulating layers 130b.

The elastic layer 130a may include a material having a high elastic modulus. For example, the elastic layer 130a may contain a polyurethane material. The elastic layer 130a may protect the battery case 120 and the electrode assembly 110 accommodated in the battery case 120 by cushioning an impact applied from the outside of the battery cell 100. In addition, deformation of the insulating case 130 due to swelling of the battery case 120 may be minimized.

The insulating layer 130b may be stacked on the elastic layer 130a. An adhesive layer may be provided between the heat insulating layer 130b and the elastic layer 130a. Alternatively, the heat insulating layer 130b may be applied on a surface of the elastic layer 130a.

The insulating layer 130b may include a material having an insulating property greater than that the battery case 120. For example, the insulating layer 130b may contain at least one material selected from mica, aerogel, or silicon.

In order to sufficiently secure an insulating effect of the insulating layer 130b, a thickness of the insulating layer 130b may be greater than or equal to that of the battery case 120. When there are the plurality of insulating layers 130b, the sum of thicknesses of the plurality of insulating layers 130b may be greater than or equal to the thickness of the battery case 120.

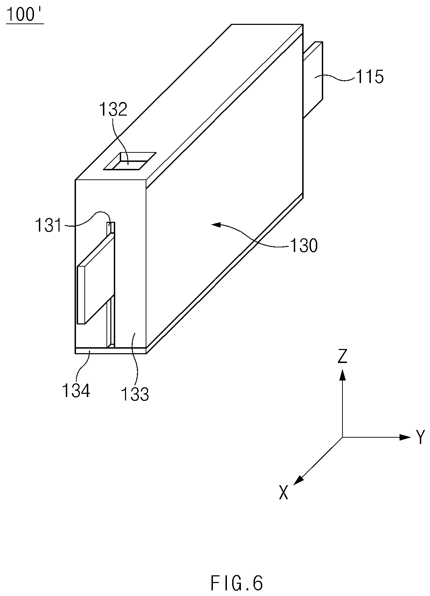

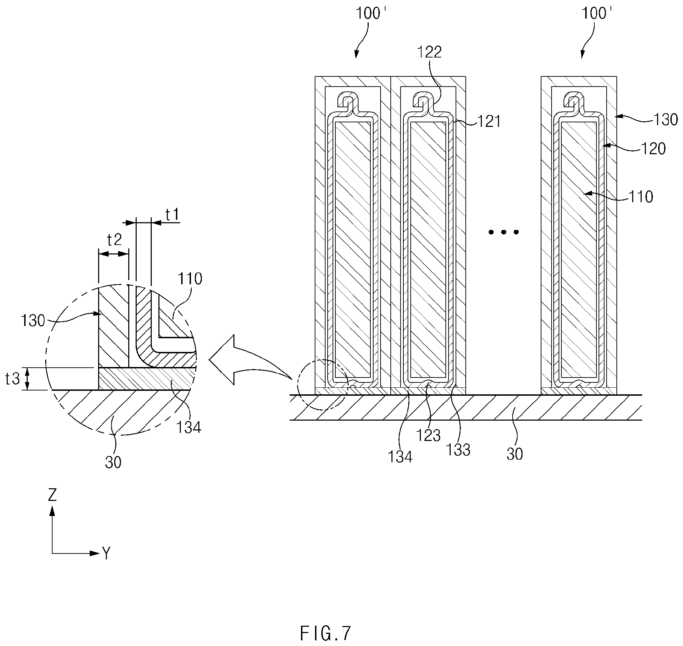

FIG. 6 is a perspective view of a battery cell according to another embodiment of the present invention, and FIG. 7 is a cross-sectional view of the battery cells according to another embodiment of the present invention.

Hereinafter, contents duplicated with those of the foregoing embodiment will be omitted, and differences will be mainly described.

An insulating case 130 of a battery cell 100' according to another embodiment of the present invention may include one surface 134 that is in contact with a heatsink 30. The one surface 134 may define a bottom surface of the insulating case 130.

The one surface 134 may be prepared separately from the other surface of the insulating case 130 so as to be provided to cover the opening 133 described above. However, it is not limited thereto, and the one surface 134 may be integrated with the other surface of the insulating case 130.

As a result, since the battery case 130 is completely surrounded by the insulating case 130, when thermal runaway or fire occurs in one battery cell 100', an occurrence of thermal propagation or spreading of flame to other battery cells 100' may be more reliably delayed or prevented.

The battery case 120 may release heat to the heatsink 30 through the one surface 134 of the insulating case 130. Preferably, a bridge 123 of the battery case 120 and surroundings of the bridge 123 may be in contact with the one surface 134 of the insulating case 130, and the one surface 134 may be in contact with the heatsink 30.

In order to minimize deterioration in heat dissipation performance due to the one surface 134 of the insulating case 130, a thickness t3 of the one surface 134 may be less than a thickness t2 of the other surface of the insulating case 130.

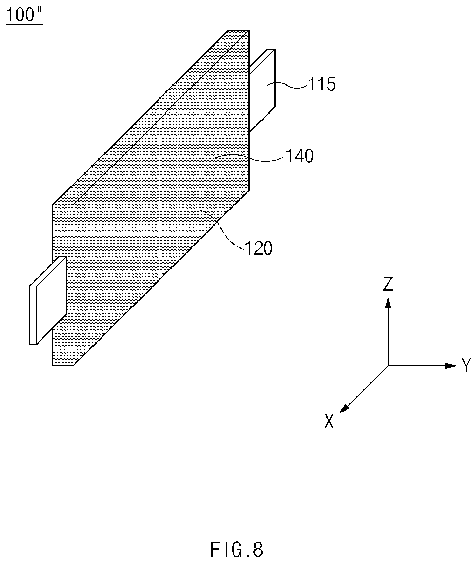

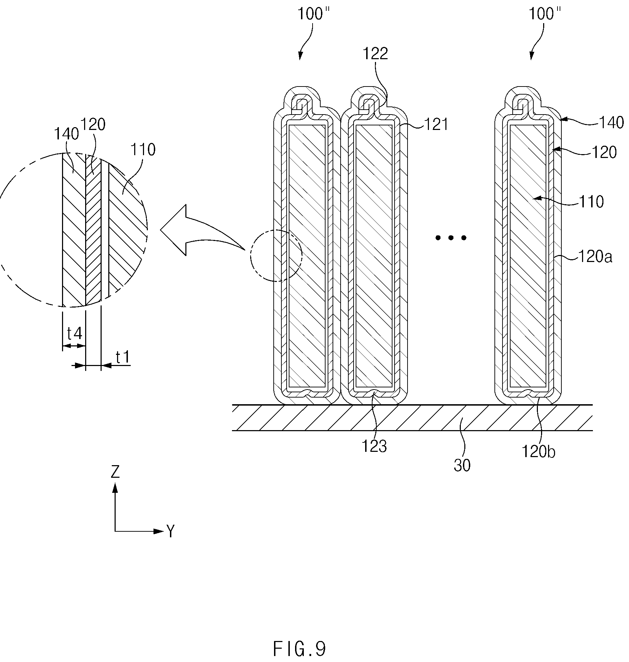

FIG. 8 is a perspective view of a battery cell according to further another embodiment of the present invention, and FIG. 9 is a cross-sectional view of the battery cells according to further another embodiment of the present invention.

Hereinafter, contents duplicated with the foregoing embodiment will be omitted, and differences will be mainly described.

A battery cell 100" according to further another embodiment of the present invention may include an insulating layer 140 applied on an outer surface of a battery case 120 instead of the insulating case 130. Thus, when compared to the foregoing embodiment, since there is no need to prepare the insulating case 130, it has an advantage of simplifying the manufacturing process.

In order to sufficiently secure an insulating effect of the insulating layer 140, a thickness t4 of at least a portion of the insulating layer 140 may be greater than or equal to a thickness t1 of the battery case 120.

As a result, even if thermal runaway and fire occurs in one battery cell 100", an occurrence of thermal propagation or spreading of fire to other surrounding battery cells 100" may be delayed or prevented by the insulating layer 140.

An outer surface of the battery case 120 may include a first area 120a coated with the insulating layer 140 and a second area 120b that is not coated with the insulating layer 140. The second area 120b may be in contact with the heatsink 30.

For example, the second area 120b may be a bottom surface of the battery case 120. In more detail, the second area 120b may be outer surfaces of the bridge 123 and surroundings of the bridge 123. In addition, the first area 120a may be a remaining outer surface excluding the second area 120b.

As a result, heat dissipation performance of the battery cell 100" may be prevented from being deteriorated due to the insulating layer 140, and heat of the battery cell 100" may be effectively dissipated.

Although not shown in the drawing, some of the plurality of battery cells provided in a battery module 1 may not include the insulating layer 140. For example, the battery cells 100" including the insulating layer 140 and the battery cells that do not include the insulating layer 140 in the plurality of battery cells may be alternately arranged.

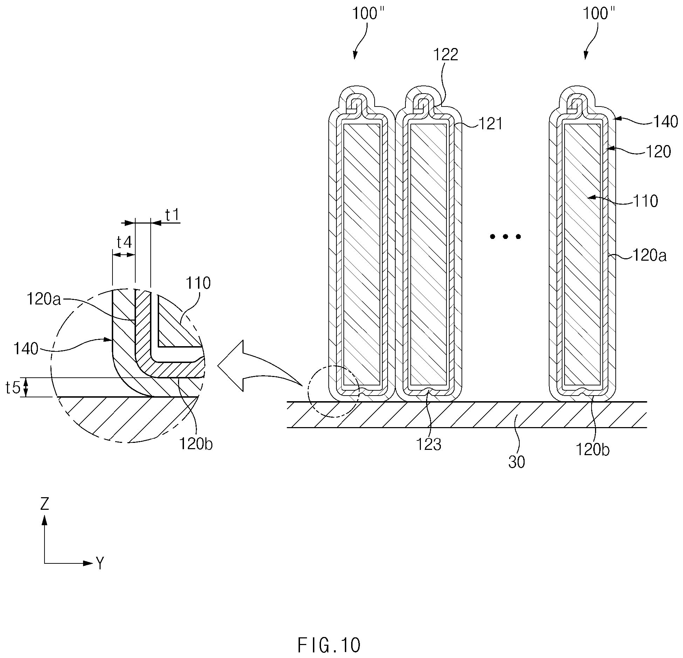

FIG. 10 is a cross-sectional view illustrating a modified example of the battery cells illustrated in FIG. 9.

According to the modified example, the heat insulating layer 140 of the battery cell 100" may be applied on an approximately entire outer surface of the battery case 120.

In this case, the outer surface of the battery case 120 may include a first area 120a coated with the heat insulating layer 140 and a second area 120b coated with the heat insulating layer 140 to a thickness thinner than the first area 120a. In addition, the heat insulating layer 140 applied on the second area 120b may be in contact with the heatsink 30.

In more detail, a thickness t5 of the insulating layer 140 applied on the second area 120b may be thinner than a thickness t4 of the insulating layer 140 applied on the first area 120a. As a result, deterioration in heat dissipation performance caused by the heat insulating layer 140 applied on the second area 120b may be minimized.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being included in the present invention.

### [Description of the Symbols]

| | | | |
|---|---|---|---|
| 1: | Battery module | 10: | Case |
| 20: | Cell stack | 30: | Heatsink |
| 100: | Battery cell | 110: | Electrode assembly |
| 115: | Electrode lead | 120: | Battery case |
| 130: | Insulating case | 131: | Slit |
| 132: | Vent hole | 133: | Opening |
| 140: | Insulating layer | | |

## Claims

1. A battery cell comprising:
an electrode assembly;
a battery case configured to accommodate the electrode assembly;
an electrode lead connected to the electrode assembly, the electrode lead extending through the battery case to protrude outside of the battery case; and
an insulating case configured to accommodate the battery case therein, the insulating case including a slit through which the electrode lead extends.

2. The battery cell of claim 1, wherein the slit extends in parallel to a width direction of the battery case.

3. The battery cell of claim 1, wherein one surface of the insulating case is opened.

4. The battery cell of claim 3, wherein the slit is connected to the opened one surface of the insulating case.

5. The battery cell of claim 1, wherein the insulating case comprises at least one material selected from mica, aerogel, or silicon.

6. The battery cell of claim 1, wherein the insulating case has a thickness greater than or equal to a thickness of the battery case.

7. The battery cell of claim 1, wherein the insulating case includes a vent hole in a surface different from the surface in which the slit is located.

8. The battery cell of claim 1, wherein the insulating case comprises:
an elastic layer having an elastic material; and
an insulating layer stacked on the elastic layer and having an insulating property greater than an insulating property of the elastic layer.

9. The battery cell of claim 8, wherein the elastic layer comprises a polyurethane material.

10. The battery cell of claim 1, wherein one surface of the insulating case has a thickness less than a thickness of another side of the insulating case.

11. A battery module comprising:
a case;
a plurality of battery cells accommodated in the case; and
a heatsink configured to dissipate heat generated from the plurality of battery cells,
wherein at least a portion of the plurality of battery cells comprises:
an electrode assembly;
a battery case configured to accommodate the electrode assembly;
an electrode lead connected to the electrode assembly to protrude to the outside of the battery case; and
an insulating case which is configured to accommodate the battery case and in which a slit through which the electrode lead passes is defined.

12. The battery module of claim 11, wherein one surface of the insulating case is opened, and
wherein the battery case is in contact with the heatsink through the opened one surface of the insulating case.

13. The battery module of claim 11, wherein one surface of the insulating case is in contact with the heatsink, and
wherein the one surface of the insulating case has a thickness less than a thickness of another side of the insulating case.

14. The battery module of claim 11, wherein, in the insulating case, a vent hole is located at a side spaced from and opposite the heatsink.

15. A battery cell comprising:
an electrode assembly;
a battery case configured to accommodate the electrode assembly; and
an insulating layer applied on an outer surface of the battery case, at least a portion of the insulating layer having a thickness greater than or equal to a thickness of the battery case.

16. The battery cell of claim 15, wherein the outer surface of the battery case comprises:
a first area coated with the insulating layer; and
a second area to which the insulating layer is not applied or a thickness of the insulating layer applied to the second area is less than a thickness of the insulating layer applied to the first area.

17. A battery module comprising:
a case;
a plurality of battery cells accommodated in the case; and
a heatsink configured to dissipate heat generated from the plurality of battery cells,
wherein at least a portion of the plurality of battery cells comprises:
an electrode assembly;
a battery case configured to accommodate the electrode assembly;
an insulating layer which is applied on an outer surface of the pouch-type battery case and of which at least a portion has a thickness greater than or equal to that of the battery case.

18. The battery module of claim 17, wherein the outer surface of the battery case comprises:
a first area coated with the insulating layer; and
a second area which is not coated with the insulating layer, the second area being in contact with the heatsink.

19. The battery module of claim 17, wherein the outer surface of the battery case comprises:
a first area coated with the insulating layer; and
a second area coated with the insulating layer, a thickness of the insulating layer applied to the second area being less than a thickness of the insulating layer applied to the first area,
wherein the insulating layer applied to the second area is in contact with the heatsink.
